# EUROPÄISCHE PATENTSCHRIFT

(11) **EP 2 585 266 B1**
(45) Veröffentlichungstag und Bekanntmachung des Hinweises auf die Patenterteilung: **13.12.2017**
(21) Anmeldenummer: 11743769.9
(22) Anmeldetag: 03.06.2011
(51) Int. Cl.: B29C 43/18, F16D 69/04

(54) **VERFAHREN ZUM KLEBEN EINES REIBBELAGS**
METHOD FOR GLUING A FRICTION LINING
PROCÉDÉ DE COLLAGE D'UNE GARNITURE DE FRICTION

(30) Priorität: 24.06.2010 DE 102010024939
(43) Veröffentlichungstag der Anmeldung: 01.05.2013
(73) Patentinhaber: Schaeffler Technologies AG & Co. KG, 91074 Herzogenaurach (DE)
(72) Erfinder: LUDES, Jens, 66701 Beckingen (DE); STEIN, Elmar, 54497 Morbach (DE); DEITERS, Ralf, 54421 Reinsfeld (DE); KOLLING, Ralph, 54497 Morbach (DE)
(86) Internationale Anmeldenummer: PCT/DE2011/001165
(87) Internationale Veröffentlichungsnummer: WO 2011/160616

(56) Entgegenhaltungen:
- EP-A1- 0 443 093
- DE-B1- 2 230 020
- DE-B4- 4 431 642
- US-A- 1 396 158
- DATABASE WPI Week 200260 Thomson Scientific, London, GB; AN 2002-560488 XP002663606, -& JP 2002 098182 A (SUMITOMO DENKO BRAKE SYSTEMS KK) 5. April 2002 (2002-04-05)
- DATABASE WPI Week 198611 Thomson Scientific, London, GB; AN 1986-073572 XP002663607, -& JP 61 024843 A (TOKYO BUHIN KOGYO CO LTD) 3. Februar 1986 (1986-02-03)

## Beschreibung

Die Erfindung betrifft ein Verfahren mit den Merkmalen gemäß dem Oberbegriff von Anspruch 1. Des Weiteren wird offenbart ein Werkzeug zum Anheften eines Reibbelags an einen Träger mit Hilfe von Kleber. Des Weiteren wird offenbart ein Werkzeug zum Stapelverkleben von Trägern mit Reibbelägen, die an die Träger geheftet sind. Die Werkzeuge sind nicht Gegenstand der Erfindung. Die JP-Offenlegungsschrift JP A 2002 098 182 sowie die JP A 61 024 843 sowie die europäische Offenlegungsschrift EP 0 443 093 A1 offenbaren Verfahren zur Verbindung zwischen einem Reibbelag sowie einer diesen tragenden Reibbelagträgerplatte.

Aus der deutschen Patentschrift DE 44 31 642 B4 ist es bekannt, bei der Herstellung eines Vorpresslings einen Reibbelag mit einem Träger zu verbinden. Der Träger kann bei einem Heißpressvorgang oder durch einen getrennten Klebeprozess mit dem fertig hergestellten Belag verbunden werden.

Aufgabe der Erfindung ist es, die Verklebung von Reibbelägen mit Trägern mit Hilfe von Kleber zu verbessern.

Diese Aufgabe wird durch ein Verfahren mit den Merkmalen gemäß Anspruch 1 gelöst. Bevorzugte Ausführungsbeispiele der Erfindung sind in den Unteransprüchen offenbart. Die Aufgabe ist also bei dem Verfahren zum Kleben eines Reibbelags auf einen Träger mit Hilfe von Kleber, der unter Einwirkung von Druck und Temperatur seine volle Klebwirkung entfaltet, dadurch gelöst, dass der Reibbelag und der Träger zusammen mit dem Kleber verpresst werden, bevor der Kleber seine volle Klebwirkung entfaltet, um den Reibbelag an den Träger zu heften. Beim Anheften des Reibbelags an den Träger wird der Reibbelag an dem Träger vorfixiert. Eine endgültige Fixierung des Reibbelags an dem Träger erfolgt erst dann, wenn der Kleber seine volle Klebwirkung entfaltet. Der Kleber entfaltet seine volle Klebwirkung unter längerer Einwirkung einer höheren Temperatur als beim Anheften des Reibbelags an den Träger in einem nachfolgenden Vernetzungs- beziehungsweise Aushärtungsprozess. Zum Anheften wird der Kleber nur kurzzeitig einem hohen Druck und einer geringeren Temperatur als beim Aushärten oder Vernetzen ausgesetzt. Bei dem Reibbelag handelt es sich vorzugsweise um einen Kupplungsreibbelag einer trockenen Reibungskupplung, insbesondere einer Doppelkupplung. Bei dem Träger handelt es sich vorzugsweise um ein Trägerblech. Vorzugsweise ist der Reibbelag mit Kleber beschichtet.

Ein bevorzugtes Ausführungsbeispiel des Verfahrens ist dadurch gekennzeichnet, dass der Kleber unter der Einwirkung von Druck und/oder Temperatur zum Fließen gebracht wird, bevor der Kleber seine volle Klebwirkung entfaltet. Der fließende Kleber verteilt sich optimal zwischen Träger und Reibbelag. Besonders vorteilhaft dringt der fließende Kleber teilweise in den vorzugsweise porösen Reibbelag ein. Dabei werden der Druck und/oder die Temperatur so eingestellt, dass der Kleber noch nicht vernetzt beziehungsweise aushärtet. Das Vernetzen beziehungsweise Aushärten des Klebers erfolgt erst nach dem Anheftprozess bei einer deutlich höheren Temperatur über längere Zeit.

Ein weiteres bevorzugtes Ausführungsbeispiel des Verfahrens ist dadurch gekennzeichnet, dass der Träger und der Reibbelag vor dem Verpressen relativ zueinander positioniert und/oder zentriert werden. Das Positionieren und/oder Zentrieren erfolgt vorzugsweise in einem speziellen Presswerkzeug. Dabei werden Träger und Reibbelag insbesondere in Umfangsrichtung relativ zueinander positioniert.

Ein weiteres bevorzugtes Ausführungsbeispiel des Verfahrens ist dadurch gekennzeichnet, dass mehrere an Träger geheftete Reibbeläge in einer Stapelverklebung verpresst werden, wobei der Kleber seine volle Klebwirkung entfaltet. Bei der Stapelverklebung werden die bereits an die Träger gehefteten Reibbeläge über einen längeren Zeitraum als beim vorangegangenen Anheftprozess bei einer hohen Temperatur verpresst, so dass der Kleber vernetzt beziehungsweise aushärtet. Der Druck ist beim Vernetzen oder Aushärten geringer als beim Anheften der Reibbeläge.

Bei einem Werkzeug zum Kleben eines Reibbelags an einen Träger mit Hilfe von Kleber, gemäß einem vorab beschriebenen Verfahren, ist die eingangs angegebene Aufgabe dadurch gelöst, dass das Werkzeug eine untere Werkzeugplatte und eine obere Werkzeugplatte aufweist, zwischen denen der Reibbelag und der Träger zusammen mit dem Kleber verpresst werden. Die Begriffe untere und obere beziehen sich auf die Wirkrichtung der Erdschwerkraft. Vorzugsweise ist der Reibbelag mit dem Kleber beschichtet. Es ist aber auch möglich, den Träger beziehungsweise den Träger und den Reibbelag mit dem Kleber zu beschichten. Die beiden Werkzeugplatten werden vorzugsweise in eine C-Ständerpresse montiert, mit welcher der benötigte Druck zum Anheften des Reibbelags an den Träger aufgebracht werden kann. In die Werkzeugplatte, die Kontakt mit dem Träger hat, wird eine Heizplatte montiert, um die zum Anheften des Reibbelags an den Träger benötigte Temperatur in das Werkzeug einzubringen.

Ein Beispiel des Werkzeugs ist dadurch gekennzeichnet, dass die untere Werkzeugplatte Zentrierstifte für den Reibbelag und Zentrierstifte für den Träger aufweist. Die Zentrierstifte dienen dazu, den Reibbelag und den Träger relativ zu dem Werkzeug und relativ zueinander zu positionieren und/oder zu zentrieren.

Ein weiteres bevorzugtes Ausführungsbeispiel des Werkzeugs ist dadurch gekennzeichnet, dass sich die Zentrierstifte an ihrem freien Ende konusartig verjüngen. Dadurch wird das Zentrieren und Positionieren des Reibbelags und des Trägers so vereinfacht, dass der Vorgang automatisiert werden kann.

Ein weiteres Beispiel des Werkzeugs ist dadurch gekennzeichnet, dass die Zentrierstifte in der unteren Werkzeugplatte in ihrer Längsrichtung bewegbar geführt und durch eine Feder in Richtung der oberen Werkzeugplatte vorgespannt sind. Dadurch wird das Positionieren und Zentrieren von Träger und Reibbelag weiter vereinfacht. Das erfindungsgemäße Werkzeug wird vorzugsweise in einer Rundtelleranlage mit weiteren Werkzeugen kombiniert.

Ein weiteres Beispiel des Werkzeugs ist dadurch gekennzeichnet, dass die Zentrierstifte für den Träger einen anderen Außendurchmesser aufweisen als die Zentrierstifte für den Reibbelag. In dem Träger und dem Reibbelag sind entsprechende Durchgangslöcher für die Zentrierstifte vorgesehen. Vorzugsweise wird zunächst der Reibbelag auf der unteren Werkzeugplatte positioniert und zentriert. Dabei ist in dem Reibbelag ein Durchgangsloch für den Zentrierstift des Trägers ausgespart.

Bei einem Werkzeug zum Stapelverkleben von Trägern mit Reibbelägen, die gemäß einem vorab beschriebenen Verfahren, mit einem vorab beschriebenen Werkzeug, an die Träger geheftet sind, ist die oben angegebene Aufgabe dadurch gelöst, dass das Werkzeug zum Stapelverkleben Zentrierstangen aufweist, die radial außerhalb der an die Träger gehefteten Reibbeläge angeordnet sind, um diese zwischen zwei Druckplatten zu positionieren und/oder zu zentrieren. Vorzugsweise sind insgesamt vier Zentrierstangen in den Eckbereichen der vorzugsweise quadratischen Druckplatten geführt. Weitere Positionierstifte, die sich durch die Träger beziehungsweise Reibbeläge hindurch erstrecken, können entfallen. Beim Stapelverkleben werden die vorher angehefteten Reibbeläge durch Aufbringen von Druck und einer hohen Temperatur über einen längeren Zeitraum fest mit den Reibbelägen verbunden, wobei der Kleber aushärtet beziehungsweise vernetzt.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: ein erfindungsgemäßes Werkzeug zum Heften in einem Schnitt entlang einer Linie I-I in Figur 2;
- Figur 2: das Werkzeug aus Figur 1 in der Draufsicht;
- Figur 3: eine perspektivische Darstellung des Schnitts aus Figur 1;
- Figur 4: eine vergrößerte Einzelheit IV auf Figur 3;
- Figur 5: eine vergrößerte Einzelheit V aus Figur 3;
- Figur 6: ein Werkzeug zur Stapelverklebung im Schnitt und
- Figur 7: einen vergrößerten Ausschnitt VII aus Figur 6.

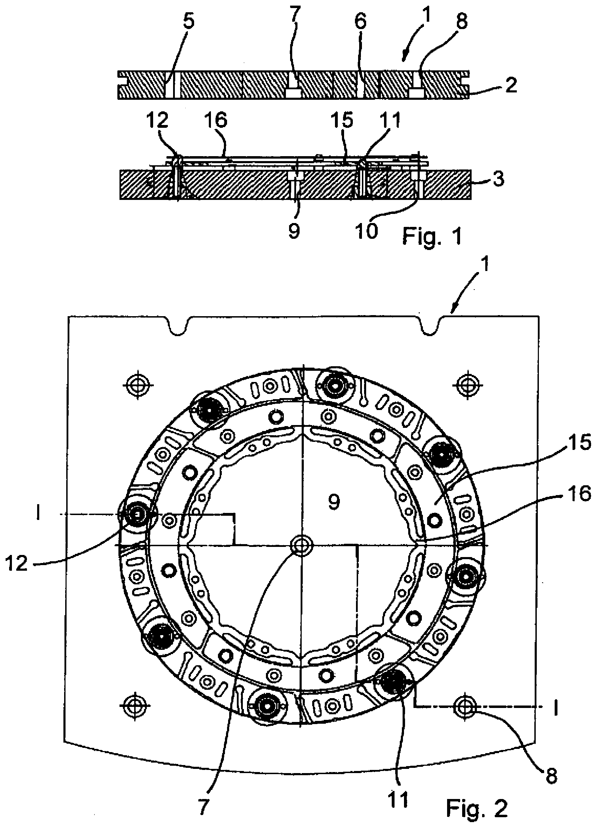

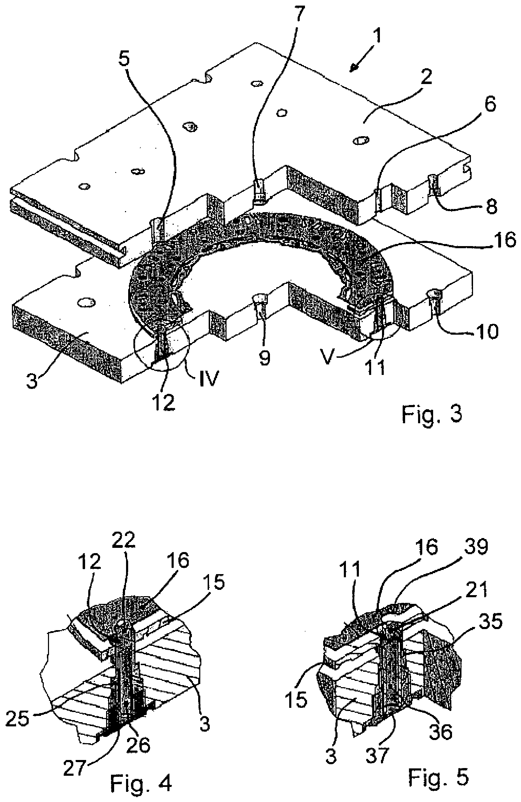

In den Figuren 1 bis 5 ist ein Werkzeug 1 zum Heften mit einer oberen Werkzeugplatte 2 und einer unteren Werkzeugplatte 3 in verschiedenen Ansichten und Ausschnitten dargestellt. In den Schnittansichten der Figuren 1 und 3 sieht man, dass die obere Werkzeugplatte 2 mehrere Durchgangslöcher 5, 6, 7, 8 aufweist. Die Durchgangslöcher 5, 6 dienen dazu, die oberen Enden von Zentrierstiften 11, 12 aufzunehmen, die in der unteren Werkzeugplatte 3 in Längsrichtung hin und her bewegbar geführt sind. Die Durchgangslöcher 7, 8 dienen zur Befestigung der oberen Werkzeugplatte 2 an einer (nicht dargestellten) C-Ständerpresse.

Die untere Werkzeugplatte 3 umfasst ebenfalls mehrere Durchgangslöcher 9, 10. Die Durchgangslöcher 9, 10 dienen dazu, die untere Werkzeugplatte 3 an der C-Ständerpresse zu befestigen. In weiteren Durchgangslöchern sind die Zentrierstifte 11, 12 hin und her bewegbar geführt.

In der in Figur 2 dargestellten Draufsicht sieht man, dass die beiden Werkzeugplatten 2, 3 jeweils insgesamt fünf Durchgangslöcher zum Befestigen der Werkzeugplatten an der Ständerpresse aufweisen. Darüber hinaus sieht man, dass das Werkzeug 1 insgesamt acht Zentrierstifte 11, 12 umfasst. Die Zentrierstifte 11 sind in Umfangsrichtung im Wechsel mit den Zentrierstiften 12 angeordnet. Dabei ist jeweils ein Zentrierstift 11 in Umfangsrichtung zwischen zwei Zentrierstiften 12 angeordnet. Analog ist in Umfangsrichtung zwischen zwei Zentrierstiften 11 jeweils ein Zentrierstift 12 angeordnet. Die Zentrierstifte 11 sind einem Reibbelag 15 zugeordnet. Die Zentrierstifte 12 sind einem Träger 16 zugeordnet, der als Trägerblech ausgeführt ist. Der Reibbelag 15 ist mit einem Kleber beschichtet, der dazu dient, den Reibbelag 15 an dem Träger 16 zu befestigen.

In den Figuren 4 und 5 sieht man, dass die Zentrierstifte 11, 12 an ihren aus der Werkzeugplatte 3 herausragenden Enden jeweils eine konusartige Verjüngung 21, 22 aufweisen. An ihren in der Werkzeugplatte 3 angeordneten Enden weisen die Zentrierstifte 11, 12 jeweils einen Bund 35; 25 auf, der einen axialen Anschlag für die Bewegung der Zentrierstifte 11, 12 aus der Werkzeugplatte 3 heraus nach oben darstellt.

Die Zentrierstifte 11, 12 sind jeweils durch eine Feder 36; 26 aus der Werkzeugplatte 3 nach oben, das heißt zu der oberen Werkzeugplatte 2 hin vorgespannt. Die Feder 36; 26 ist mit ihrem oberen Ende jeweils in dem hohl ausgeführten Zentrierstift 11, 12 angeordnet. Mit ihrem unteren Ende stützt sich die Feder 36; 26 an einem Federdeckel 37; 27 ab, der an der Unterseite der unteren Werkzeugplatte 3 befestigt ist.

In Figur 4 sieht man, dass sich der Zentrierstift 12 sowohl durch den Reibbelag 15 als auch durch den darüber angeordneten Träger 16 hindurch erstreckt. Die konusartige Verjüngung 22 am freien Ende des Zentrierstifts 12 ragt teilweise über den Träger 16 hinaus in das darüber angeordnete Durchgangsloch 5 der oberen Werkzeugplatte 2.

In Figur 5 sieht man, dass der Zentrierstift 11 für den Reibbelag 15 nach oben über den Reibbelag 15 hinaus ragt. Der Träger 16 weist im Bereich des Zentrierstifts 11 ein Durchgangsloch 39 auf. Durch das Durchgangsloch 39 kann sich der Zentrierstift 11 in das darüber angeordnete Durchgangsloch 6 der oberen Werkzeugplatte 3 erstrecken.

Das in den Figuren 1 bis 5 dargestellte Werkzeug 1 zum Heften wird auch als Anheftwerkzeug bezeichnet. Die beiden Werkzeugplatten 2, 3 sind zum Beispiel aus Werkzeugstahl gefertigt und werden über spezielle Führungen an der C-Ständerpresse montiert. Auf der unteren Werkzeugplatte 3 wird der Reibbelag 15 durch die vier Zentrierstifte 11 zentriert und positioniert. Daraufhin wird der Träger 16 über die vier Zentrierstifte 12 zum Reibbelag 15 hin positioniert und zentriert.

Danach fährt die Presse zu und vorfixiert den Träger 16 auf dem Reibbelag 15. Das Vorfixieren wird auch als Heften oder Anheften bezeichnet. Beim Vorfixieren wird der Träger 16 an den Reibbelag 15 geheftet. Dabei wird selbstverständlich auch der Reibbelag 15 an den Träger 16 geheftet. Bei einer Variante des Werkzeugs 1 kann zuerst der Reibbelag 15 und danach der Träger 16 eingelegt werden.

Als Kleber wird vorzugsweise ein hitzeaktivierbarer, gegebenenfalls lösungsmittelhaltiger Klebstoff auf der Basis von Niltrilkautschuk/Phenolharz verwendet. Zum Anheften wird mit der Ständerpresse vorzugsweise ein Druck von circa 50 Tonnen bei einer Anheftzeit von etwa 10 Sekunden aufgebracht. Die Anhefttemperatur beträgt zwischen 150 Grad Celsius und 205 Grad Celsius. Bei diesem Anheftdruck und dieser Anhefttemperatur beginnt der Kleber zu fließen, härtet aber dabei noch nicht aus.

In dem Werkzeug 1 wird jeweils ein Reibbelag 15 an einen Träger 16 geheftet oder umgekehrt. Nach dem Anheften wird der geheftete Reibbelag-Träger-Verbund aus dem geöffneten Werkzeug 1 entnommen. Die zusammengehefteten Reibbelag/Träger-Verbundteile werden anschließend in einem Werkzeug 41 einer Stapelverklebung unterzogen.

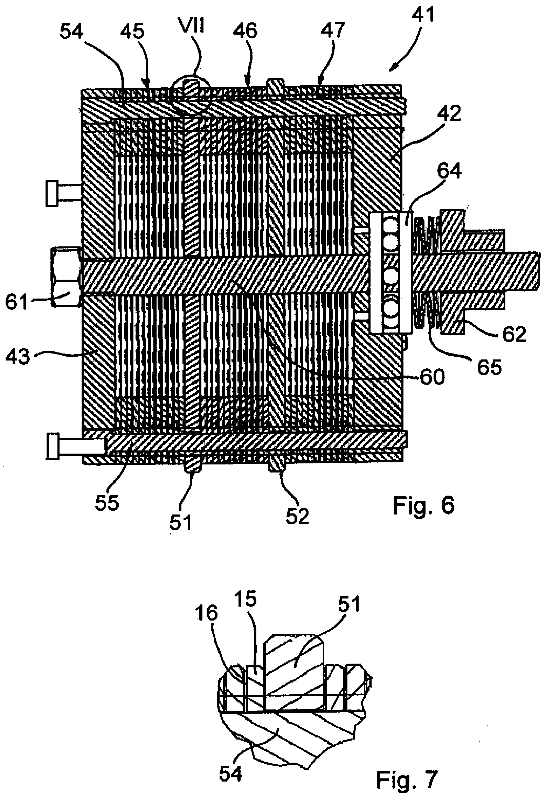

In den Figuren 6 und 7 ist ein Werkzeug 41 zur Stapelverklebung in verschiedenen Ansichten dargestellt. Das Stapelverklebungs-Werkzeug 41 umfasst zwei Druckplatten 42 und 43. Die Druckplatte 42 kann, bezogen auf die Wirkrichtung der Erdschwerkraft, oberhalb der Druckplatte 43 angeordnet werden. Zwischen den beiden Druckplatten 42 und 43 sind insgesamt drei Stapel 45, 46, 47 mit zusammengehefteten Reibbelag/Träger-Verbundteilen angeordnet. Jeder Stapel umfasst jeweils zwölf geheftete Verbundteile, die jeweils einen Reibbelag 15 umfassen, der an den zugehörigen Träger 16 angeheftet ist. Zwischen den Stapeln 45, 46 und 46, 47 ist jeweils eine Zwischenplatte 51, 52 angeordnet.

In dem äußeren Umfangsrandbereich des Werkzeugs 41 erstrecken sich vier Zentrierstangen 54, 55 außerhalb der Stapel 45 bis 47 durch die Zwischenplatten 51, 52 hindurch. Gemäß einem Beispiel sind die vier Zentrierstangen 54, 55 radial außerhalb der Stapel 45 bis 47 so in den Eckbereichen der Druckplatten 42, 43 angeordnet, dass die an die Träger 16 gehefteten Reibbeläge 15 radial innerhalb der Zentrierstangen 54, 55 zentriert werden.

Eine zentrale Gewindestange 60 erstreckt sich durch die Druckplatten 42, 43, die Stapel 45 bis 47 und die Zwischenplatten 51, 52 hindurch. An einem Ende der Gewindestange 60 ist eine erste Mutter 61 befestigt. Auf das andere Ende der Gewindestange 60 ist eine zweite Mutter 62 aufgeschraubt. Zwischen der Mutter 62 und der Druckplatte 42 sind ein Lager 64, das als Axial-Rillenkugellager ausgeführt ist, und ein Tellerfederpaket 65 angeordnet.

Über die Mutter 62 und die zentrale Gewindestange 60 wird ein definiertes Drehmoment eingebracht, um die beiden Druckplatten 42 und 43 gegeneinander zu verspannen. Bei der Stapelverklebung wird ein ausreichender Druck auf das Werkzeug 41 aufgebracht. Dabei wird das Werkzeug 41, zum Beispiel in einem Ofen, etwa sechs Stunden lang einer Temperatur von etwa 205 Grad Celsius ausgesetzt. Bei den bereits gehefteten Verbundteilen kann gegebenenfalls bei der Stapelverklebung ein deutlich geringerer Druck von circa drei Tonnen genügen, um den Kleber auszuhärten beziehungsweise zu vernetzen.

Bei der Stapelverklebung vernetzt der Kleber vollständig. Vor der Entnahme der Stapel 45 bis 47 werden diese auf Raumtemperatur abgekühlt. Der Druck bei der Stapelverklebung wird vorzugsweise vom Einspannen der Druckplatten 42, 43 über die Stapelverklebung im Ofen bis hin zum Entpacken aufrecht erhalten. Durch die Kombination des Anheft-prozesses in dem in den Figuren 1 bis 5 dargestellten Werkzeug 1 mit der Stapelverklebung in dem in den Figuren 6 und 7 dargestellten Werkzeug 41 können extrem hohe Anforderungen im Hinblick auf die Berstdrehzahl, insbesondere nach thermischen Schädigungen, erfüllt werden.

### Bezugszeichenliste

- 1: Werkzeug
- 2: obere Werkzeugplatte
- 3: untere Werkzeugplatte
- 5: Durchgangsloch
- 6: Durchgangsloch
- 7: Durchgangsloch
- 8: Durchgangsloch
- 9: Durchgangsloch
- 10: Durchgangsloch
- 11: Zentrierstift
- 12: Zentrierstift
- 15: Reibbelag
- 16: Träger
- 21: konusartige Verjüngung
- 22: konusartige Verjüngung
- 25: Bund
- 26: Feder
- 27: Federdeckel
- 35: Bund
- 36: Feder
- 37: Federdeckel
- 39: Durchgangsloch
- 41: Werkzeug
- 42: obere Druckplatte
- 43: untere Druckplatte
- 45: Stapel
- 46: Stapel
- 47: Stapel
- 51: Zwischenplatte
- 52: Zwischenplatte
- 54: Zentrierstange
- 55: Zentrierstange
- 60: Gewindestange
- 61: Mutter
- 62: Mutter
- 64: Lager
- 65: Tellerfederpaket

## Patentansprüche

1. Verfahren zum Kleben eines Reibbelags auf einen Träger mit Hilfe von Kleber, der unter Einwirkung von Druck und Temperatur seine volle Klebwirkung entfaltet, wobei der Reibbelag (15) und der Träger (16) zusammen mit dem Kleber in einem Anheftprozess verpresst werden, bevor der Kleber in einem Vernetzungsprozess seine volle Klebwirkung entfaltet, um den Reibbelag (15) an den Träger (16) zu heften, wobei die Temperatur während des Vernetzungsprozesses höher ist als während des Anheftprozesses und wobei der Druck während des Anheftprozesses höher ist als während des Vernetzungsprozesses und wobei für den Anheftprozess ein kürzerer Zeitraum vorgesehen ist als für den Vernetzungsprozess, wobei der Vernetzungsprozess bei einem Druck von 3000 kg erfolgt.

2. Verfahren nach Anspruch 1, **dadurch gekennzeichnet, dass** der Kleber unter der Einwirkung von Druck und/oder Temperatur während des Anheftprozesses zum Fließen gebracht wird, bevor der Kleber während des Vernetzungsprozesses seine volle Klebwirkung entfaltet.

3. Verfahren nach einem der vorhergehenden Ansprüche, **dadurch gekennzeichnet, dass** der Träger (16) und der Reibbelag (15) vor dem Verpressen im Anheftprozess relativ zueinander positioniert und/oder zentriert werden.

4. Verfahren nach einem der vorhergehenden Ansprüche, **dadurch gekennzeichnet, dass** mehrere im Anheftprozess an Träger (16) geheftete Reibbeläge (15) im Vernetzungsprozess in einer Stapelverklebung verpresst werden, wobei der Kleber seine volle Klebwirkung entfaltet.

## Claims

1. Method for gluing a friction lining to a support by means of an adhesive that develops its full adhesive effect under the influence of pressure and temperature, wherein the friction lining (15) and the support (16) are pressed together along with the adhesive in an affixation process before the adhesive in a crosslinking process develops its full adhesive effect in order to stick the friction lining (15) to the support (16), wherein the temperature is higher during the crosslinking process than during the affixation process and wherein the pressure is higher during the affixation process than during the crosslinking process, and wherein a shorter time period is provided for the affixation process than for the crosslinking process, wherein the crosslinking process is performed at a pressure of 3000 kg.

2. Method according to Claim 1, **characterized in that** the adhesive is made to flow under the influence of pressure and/or temperature during the affixation process, before the adhesive during the crosslinking process develops its full adhesive effect.

3. Method according to one of the preceding claims, **characterized in that** the support (16) and the friction lining (15) are positioned and/or centered relative to one another before being pressed together in the affixation process.

4. Method according to one of the preceding claims, **characterized in that** a plurality of friction linings (15) stuck in the affixation process to supports (16) are pressed together in the crosslinking process in a stacked-gluing process, wherein the adhesive develops its full adhesive effect.

## Revendications

1. Procédé de collage d'une garniture de friction sur un support à l'aide de colle, qui déploie son plein effet d'adhérence sous l'effet de pression et de température, la garniture de friction (15) et le support (16) étant pressés ensemble avec la colle dans un processus d'adhérence avant que la colle ne déploie son plein effet d'adhérence dans un processus de réticulation, afin de faire adhérer la garniture de friction (15) au support (16), la température pendant le processus de réticulation étant supérieure à la température pendant le processus d'adhérence et la pression pendant le processus d'adhérence étant supérieure à la pression pendant le processus de réticulation et, pour le processus d'adhérence, l'intervalle de temps prévu étant plus court que pour le processus de réticulation, le processus de réticulation s'effectuant à une pression de 3000 kg.

2. Procédé selon la revendication 1, **caractérisé en ce que** la colle, sous l'effet de pression et/ou de température pendant le processus d'adhérence, est amenée à couler avant que la colle ne déploie son plein effet d'adhérence pendant le processus de réticulation.

3. Procédé selon l'une quelconque des revendications précédentes, **caractérisé en ce que** le support (16) et la garniture de friction (15) sont positionnés et/ou centrés l'un par rapport à l'autre avant la compression au cours du processus d'adhérence.

4. Procédé selon l'une quelconque des revendications précédentes, **caractérisé en ce que** plusieurs garnitures de friction (15) collées sur le support (16) au cours du processus d'adhérence sont pressées au cours du processus de réticulation dans un collage empilé, la colle déployant son plein effet d'adhérence.
